(19) Europäisches Patentamt
European Patent Office
Office européen des brevets

(11) **EP 4 354 551 B1**

(12) **EUROPEAN PATENT SPECIFICATION**

(45) Date of publication and mention of the grant of the patent:
**02.09.2026 Bulletin 2026/36**

(21) Application number: **22849924.0**

(22) Date of filing: **29.07.2022**

(51) International Patent Classification (IPC):
***H01M 4/13*** *(2010.01)* ***H01M 4/139*** *(2010.01)*
***H01M 4/62*** *(2006.01)* ***H01M 10/052*** *(2010.01)*
***C01B 32/174*** *(2017.01)*

(52) Cooperative Patent Classification (CPC):
**H01M 10/052; C01B 32/174; H01M 4/13; H01M 4/139; H01M 4/62; H01M 4/622; H01M 4/625;** Y02E 60/10

(86) International application number:
**PCT/KR2022/011192**

(87) International publication number:
**WO 2023/008949 (02.02.2023 Gazette 2023/05)**

(54) **CONDUCTIVE MATERIAL DISPERSION AND ELECTRODE AND LITHIUM SECONDARY BATTERY PREPARED BY USING SAME**

DISPERSION AUS LEITFÄHIGEM MATERIAL UND DAMIT HERGESTELLTE ELEKTRODE UND LITHIUMSEKUNDÄRBATTERIE

DISPERSION DE MATÉRIAU CONDUCTEUR ET ÉLECTRODE ET BATTERIE SECONDAIRE AU LITHIUM PRÉPARÉES À L'AIDE DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.07.2021 KR 20210100130**

(43) Date of publication of application:
**17.04.2024 Bulletin 2024/16**

(73) Proprietor: **LG Energy Solution, Ltd.**
**Seoul 07335 (KR)**

(72) Inventors:
- **KIM, Ju Ryoun**
  **Daejeon 34122 (KR)**
- **KIM, Woo Ha**
  **Daejeon 34122 (KR)**
- **YOON, Sung Soo**
  **Daejeon 34122 (KR)**
- **YANG, Jeong Min**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:

**WO-A1-2020/235849**
**KR-A- 20120 021 807**
**KR-A- 20170 111 749**
**KR-A- 20170 111 749**
**KR-A- 20180 054 355**
**KR-A- 20180 054 355**
**KR-A- 20190 037 277**
**KR-A- 20200 132 721**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### TECHNICAL FIELD

The present invention relates to a conductive agent dispersion, and an electrode and a lithium secondary battery which are prepared by using the same. More specifically, the present invention relates to a conductive agent dispersion, in which an increase in viscosity may be suppressed by using a copolymer including a specific unit, as an auxiliary dispersant, together with a nitrile-based copolymer having a specific residual double bond value as a main dispersant, and an electrode and a lithium secondary battery which are prepared by using the same.

### BACKGROUND ART

A secondary battery is a battery that may be used repeatedly through a discharging process, in which chemical energy is converted into electrical energy, and a charging process in a reverse direction thereto. The secondary battery is composed of a positive electrode, a negative electrode, an electrolyte, and a separator, and the positive electrode and the negative electrode generally include an electrode current collector and an electrode active material layer formed on the electrode current collector. The electrode active material layer is prepared by a method in which the electrode collector is coated with an electrode slurry composition including an electrode active material, a conductive agent, and a binder, dried, and then rolled.

Various materials may be used as the conductive agent, but a technique using carbon nanotubes as the conductive agent has recently attracted attention to maximize conductivity.

However, since the carbon nanotubes are not uniformly dispersed in an electrode slurry and easily aggregated, there is a problem in that the conductive agent is not evenly distributed in the electrode active material layer when an electrode is formed by using the carbon nanotubes. In order to solve this problem, a method has been developed in which, after a conductive agent dispersion is prepared by first mixing the conductive agent in a solvent together with a dispersant such as polyvinyl pyrrolidone (hereinafter, PVP) and a hydrogenated acrylonitrile-butadiene rubber, the conductive agent dispersion is used in the electrode slurry.

However, since viscosity of the conductive agent dispersion using the PVP dispersant is rapidly increased when an amount of the conductive agent is increased, there is a limitation in increasing a conductive agent content, and thus, an improvement in electrical conductivity has been limited. Also, when using the general hydrogenated acrylonitrile-butadiene rubber, there is a problem in that viscosity is excessively increased in a process of storing the prepared conductive agent dispersion, and there is a problem in that the viscosity is excessively increased if the conductive agent dispersion is exposed to a high temperature during the preparation of the electrode slurry. If the viscosity of the conductive agent dispersion is increased as described above, it becomes difficult to control discharge and loading of the electrode slurry during transfer and coating processes of the electrode slurry, and life characteristics of a prepared battery are degraded.

Thus, there is a need to develop a conductive agent dispersion capable of maximally suppressing an increase in viscosity even if it is stored for a long time or exposed to high temperatures.

WO 2020235849 describes a conductive dispersion, and an electrode and a lithium secondary battery manufactured using the dispersion. A copolymer containing a specific unit is used as an auxiliary dispersant together with a nitrile copolymer used as a main dispersant.

KR 1020170111749 describes a composition for forming a positive electrode of a secondary battery, and a positive electrode for a secondary battery and a secondary battery manufactured using the same. This document aims at increasing the dispersibility of a conductive agent and the adhesive strength between active materials or between an active material and a current collector.

### DISCLOSURE OF THE INVENTION

### TECHNICAL PROBLEM

An aspect of the present invention provides a conductive agent dispersion capable of maximally suppressing an increase in viscosity even if it is stored for a long time or exposed to high temperatures.

Another aspect of the present invention provides an electrode and a lithium secondary battery which are prepared by using the above conductive agent dispersion.

### TECHNICAL SOLUTION

According to an embodiment of the present invention, there is provided a conductive agent dispersion including

carbon nanotubes, a dispersant, and a dispersion medium, wherein the dispersant includes a main dispersant and an auxiliary dispersant, wherein the main dispersant is a hydrogenated nitrile-based copolymer, a residual double bond value of the hydrogenated nitrile-based copolymer according to Equation 1 satisfies 0.3 wt% or less, and the auxiliary dispersant is a copolymer including an oxyalkylene unit; and at least one of a styrene unit and an alkylene unit.

$$\text{Residual double bond (wt\%)} = \text{CD weight} / (\text{CD weight} + \text{HCD weight}) \times 100 \quad \text{[Equation 1]}$$

In Equation 1, the CD weight is a weight of a conjugated diene-derived structural unit in the hydrogenated nitrile-based copolymer, and the HCD weight is a weight of a hydrogenated conjugated diene-derived structural unit in the hydrogenated nitrile-based copolymer.

According to another embodiment of the present invention, there is provided an electrode including an electrode active material layer formed of an electrode slurry composition, wherein the electrode slurry composition includes an electrode active material, the conductive agent dispersion of the above embodiment, a binder, and a solvent.

According to another embodiment of the present invention, there is provided a lithium secondary battery including a positive electrode, a negative electrode, a separator disposed between the positive electrode and the negative electrode, and an electrolyte. In this case, the positive electrode may be the electrode of the above embodiment.

## ADVANTAGEOUS EFFECTS

Since a conductive agent dispersion according to the present invention includes both a hydrogenated nitrile-based copolymer having a residual double bond value of 0.3 wt% or less and a copolymer including an oxyalkylene unit; and at least one of a styrene unit and an alkylene unit, an increase in viscosity of the conductive agent dispersion may be effectively suppressed even during long-term storage or high-temperature exposure. Accordingly, discharge and loading control of an electrode slurry during transfer and coating processes of the electrode slurry may be smooth, and life characteristics of a prepared battery may be improved.

## MODE FOR CARRYING OUT THE INVENTION

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

In the present specification, the expression "specific surface area" is measured by a Brunauer-Emmett-Teller (BET) method, wherein, specifically, the specific surface area may be calculated from a nitrogen gas adsorption amount at a liquid nitrogen temperature (77K) using BELSORP-mino II by Bell Japan Inc.

$D_{50}$ and $D_{90}$ in the present specification may be defined as particle diameters at cumulative volumes of 50% and 90% in a particle diameter distribution curve, respectively. The $D_{50}$ and $D_{90}$, for example, may be measured by using a laser diffraction method. The laser diffraction method may generally measure a particle diameter ranging from submicrons to a few mm and may obtain highly repeatable and high-resolution results.

The expression "weight-average molecular weight (Mw)" in the present specification denotes a standard polystyrene-equivalent value measured by gel permeation chromatography (GPC). Specifically, the weight average molecular weight is a value obtained by converting a value measured using GPC under the following conditions, and standard polystyrene of Agilent system was used to prepare a calibration curve.

<Measurement conditions>

Measuring instrument: Agilent GPC (Agulent 1200 series, USA)
Column: connect two PL mixed B
Column temperature: 40°C
Eluent: tetrahydrofuran
Flow rate: 1.0 mL/min

Concentration: ~ 1 mg/mL (100 μL injection)

In the present specification, CD weight and HCD weight for calculating a residual double bond value may be confirmed by a 1H high-resolution magic angle spinning (HR-MAS) nuclear magnetic resonance (NMR) method. Agilent 600 MHz HR-MAS NMR and Bruker 600 MHz NMR may be used as measuring instruments. Specifically, after a trace amount of a dried hydrogenated nitrile-based copolymer sample is put into an HR-MAS rotor and sampled by adding trichloroethylene (TCE) to make it swollen, a 1H HR-MAS NMR experiment may be performed (zg45, ns=32, d1=5s, room temperature conditions). Alternatively, solution NMR (1H-13C HSQC NMR, room temperature conditions) may be performed by dissolving about 5 mg of a dried hydrogenated nitrile-based copolymer sample in about 0.5 ml of deuterated chloroform ($CDCl_3$) and sampling. The CD weight and the HCD weight may be measured by checking NMR peaks through the above measurement method.

Hereinafter, the present invention will be described in detail.

## <Conductive Agent Dispersion>

A conductive agent dispersion according to an embodiment of the present invention includes carbon nanotubes, a dispersant, and a dispersion medium, wherein the dispersant includes a main dispersant and an auxiliary dispersant, wherein the main dispersant is a hydrogenated nitrile-based copolymer, a residual double bond value of the hydrogenated nitrile-based copolymer according to Equation 1 satisfies 0.3 wt% or less, and the auxiliary dispersant may be a copolymer including an oxyalkylene unit; and at least one of a styrene unit and an alkylene unit.

$$\text{Residual double bond (wt\%)} = \text{CD weight}/(\text{CD weight}+\text{HCD weight})\times 100 \qquad \text{[Equation 1]}$$

In Equation 1, the CD weight is a weight of a conjugated diene-derived structural unit in the hydrogenated nitrile-based copolymer, and the HCD weight is a weight of a hydrogenated conjugated diene-derived structural unit in the hydrogenated nitrile-based copolymer.

Hereinafter, each component of the conductive agent dispersion according to the present invention will be described in detail.

### (1) Carbon Nanotube

A graphite sheet of carbon nanotubes has a cylindrical shape with a nano-sized diameter and has an $sp^2$ bond structure, wherein the carbon nanotubes exhibit characteristics of conductors or semiconductors depending on a structure and an angle at which the graphite sheet is rolled. The carbon nanotubes may be classified into single-walled carbon nanotubes (SWCNTs), double-walled carbon nanotubes (DWCNTs), and multi-walled carbon nanotubes (MWCNTs) depending on the number of bonds forming the wall.

Particularly, it is most preferable to use multi-walled carbon nanotubes in the present invention because conductivity of an electrode may be secured even with a small content.

The carbon nanotubes may have a secondary shape formed by arranging or agglomeration of a plurality of carbon nanotubes, and, for example, the carbon nanotubes may be bundle-type carbon nanotubes in the form of a bundle or rope in which the plurality of carbon nanotubes are arranged or aligned side by side in a predetermined direction or may be entangled-type carbon nanotubes in the form of a sphere or potato in which the plurality of carbon nanotubes are entangled without a predetermined direction. In terms of dispersibility, it is more desirable that the carbon nanotubes are bundle-type carbon nanotubes.

The carbon nanotubes may have a $D_{50}$ of 2 μm to 5 μm, specifically, 2.5 μm to 4 μm. The carbon nanotubes may have a $D_{90}$ of 6 μm to 10.5 μm, specifically, 6.5 μm to 9 μm. That the above ranges are satisfied means that the bundle-type carbon nanotubes used as a raw material are effectively dispersed and present in the conductive agent dispersion, and thus, it is effective in improving electrode and battery resistance.

The carbon nanotubes may be included in an amount of 2 wt% to 8 wt%, particularly 3 wt% to 6 wt%, and more particularly 3 wt% to 4.5 wt% in the conductive agent dispersion. When the above range is satisfied, addition and transfer of an electrode slurry are easy while high productivity is maintained. Also, since a solid content of the prepared electrode slurry is not excessively low, occurrence of binder migration during drying of the electrode is suppressed, and thus, electrode adhesion may be improved.

### (2) Dispersant

The conductive agent dispersion according to the present embodiment includes at least two kinds of dispersants.

Specifically, the dispersant may include a main dispersant and an auxiliary dispersant.

**2-1) Main Dispersant**

The main dispersant is to improve dispersibility of the carbon nanotubes in the conductive agent dispersion, wherein it may be a hydrogenated nitrile-based copolymer. The hydrogenated nitrile-based copolymer may be a copolymer including an $\alpha,\beta$-unsaturated nitrile-derived structural unit and a hydrogenated conjugated diene-derived structural unit, or may be a copolymer including an $\alpha,\beta$-unsaturated nitrile-derived structural unit, a conjugated diene-derived structural unit, and a hydrogenated conjugated diene-derived structural unit. Specifically, the hydrogenated nitrile-based copolymer may be a hydrogenated nitrile-based copolymer in which all conjugated diene-derived structural units are hydrogenated and the conjugated diene-derived structural unit is not included, or, alternatively, may be a partially hydrogenated nitrile-based copolymer in which the hydrogenated conjugated diene-derived structural unit, which is formed by hydrogenation of a portion of the conjugated diene-derived structural units, is included together with the conjugated diene-derived structural unit.

The hydrogenated nitrile-based copolymer may be a hydrogenated acrylonitrile-butadiene rubber, specifically, a partially hydrogenated acrylonitrile-butadiene rubber.

A hydrogenation method of the conjugated diene may be performed through a hydrogenation reaction known in the art, for example, a catalytic hydrogenation reaction using a catalyst system such as rhodium (Rh), ruthenium (Ru), palladium (Pd), and iridium (Ir), and a hydrogenation rate may be adjusted by controlling an amount of the catalyst, reaction hydrogen pressure, or reaction time.

The hydrogenated nitrile-based copolymer may be prepared by copolymerization of an $\alpha,\beta$-unsaturated nitrile monomer and a conjugated diene-based monomer, and then hydrogenation of a C=C double bond in the copolymer. Polymerization reaction and hydrogenation process of the monomers may be performed according to a conventional method.

As the $\alpha,\beta$-unsaturated nitrile monomer, for example, acrylonitrile or methacrylonitrile may be used, and one alone or a mixture of two or more thereof may be used. As the conjugated diene-based monomer, for example, conjugated diene-based monomers having 4 to 6 carbon atoms, such as 1,3-butadiene, isoprene, or 2,3-methyl butadiene, may be used, and one alone or a mixture of two or more thereof may be used.

The $\alpha,\beta$-unsaturated nitrile-derived structural unit may be included in an amount of 20 wt% to 50 wt%, specifically, 30 wt% to 40 wt% in the hydrogenated nitrile-based copolymer. When the above range is satisfied, since affinity between the hydrogenated nitrile-based copolymer and a solvent is at an appropriate level, it is effective in preparing the conductive agent dispersion.

The hydrogenated nitrile-based copolymer may have a residual double bond value according to Equation 1 of 0.3 wt% or less (0 wt% to 3 wt%), particularly 0.01 wt% to 0.3 wt%, and more particularly 0.1 wt% to 0.3 wt%, for example, 0.1 wt% to 0.25 wt%.

$$\text{Residual double bond (wt\%)} = \text{CD weight}/(\text{CD weight}+\text{HCD weight})\times 100 \qquad \text{[Equation 1]}$$

In Equation 1, the CD weight is a weight of the conjugated diene-derived structural unit in the hydrogenated nitrile-based copolymer, and the HCD weight is a weight of the hydrogenated conjugated diene-derived structural unit in the hydrogenated nitrile-based copolymer.

In a case in which the residual double bond value is greater than 0.3 wt%, high-temperature phase stability of the conductive agent dispersion is reduced, and there is a problem in that an electrolyte solution side reaction easily occurs. In the present invention, process stability of the conductive agent dispersion and the electrode slurry and battery life characteristics may be improved by adjusting the residual double bond value to an appropriate value and using the hydrogenated nitrile-based copolymer in combination with the auxiliary dispersant.

The residual double bond value may be 0 wt%, but may be preferably 0.01 wt% or more in consideration of cost and yield according to technical level.

According to an embodiment, the hydrogenated nitrile-based copolymer may include a unit represented by the following [Formula 1] and a repeating unit represented by the following [Formula 2], or may include the unit represented by the following [Formula 1], the unit represented by the following [Formula 2], and a unit represented by the following [Formula 3].

[Formula 1]

$$-\!\!\left[ CH_2 - \underset{\displaystyle C\equiv N}{\underset{|}{CH}} \right]\!\!-$$

[Formula 2]

$$-\!\!\left[ CH_2 - CH_2 - CH_2 - CH_2 \right]\!\!-$$

[Formula 3]

$$-\!\!\left[ CH_2 - CH = CH - CH_2 \right]\!\!-$$

The hydrogenated nitrile-based copolymer may have a weight-average molecular weight of 1,000 g/mol to 100,000 g/mol, specifically, 20,000 g/mol to 40,000 g/mol. When the above range is satisfied, low viscosity of the conductive agent dispersion may be secured.

The hydrogenated nitrile-based copolymer may be included in an amount of 0.2 wt% to 3.2 wt%, specifically, 0.6 wt% to 1.5 wt% in the conductive agent dispersion. When the above range is satisfied, the carbon nanotubes may be smoothly dispersed in the conductive agent dispersion, energy density of the prepared electrode may be improved, and resistance may be reduced.

**2-2) Auxiliary Dispersant**

The auxiliary dispersant is to improve the dispersibility of the conductive agent by assisting the main dispersant, wherein it is a copolymer including an oxyalkylene unit and a styrene unit and/or an alkylene unit.

The oxyalkylene unit may be represented by Formula 4 below.

[Formula 4]

$$-\!\!\left[ R_1 - O \right]\!\!-$$

In Formula 4,

$R_1$ is an alkylene group having 1 to 20 carbon atoms, preferably an alkylene group having 2 to 10 carbon atoms, and more preferably an alkylene group having 2 to 5 carbon atoms.

The oxyalkylene unit may be included in an amount of 20 wt% to 85 wt%, preferably, 30 wt% to 60 wt% based on a total weight of the auxiliary dispersant (the copolymer including an oxyalkylene unit and a styrene unit and/or an alkylene unit). When the above range is satisfied, since emulsion particles may be stably formed during the preparation of the conductive agent dispersion, there is an effect of promoting the dispersion of the carbon nanotubes.

The styrene unit may be represented by Formula 5 below.

[Formula 5]

In Formula 5, $R_2$ may be hydrogen, halogen, an alkyl group having 1 to 10 carbon atoms, an alkoxy group having 1 to 10 carbon atoms, or a combination thereof.

The styrene unit may be included in an amount of 70 wt% or less, preferably, 10 wt% to 30 wt% based on the total weight of the auxiliary dispersant (the copolymer including an oxyalkylene unit and a styrene unit and/or an alkylene unit). When the above range is satisfied, since the emulsion particles may be stably formed during the preparation of the conductive agent dispersion, there is an effect of promoting the dispersion of the carbon nanotubes.

The alkylene unit may be represented by [Formula 6] below.

[Formula 6]

In Formula 6, n may be an integer of 1 to 50, and may preferably be an integer of 3 to 30.

The alkylene unit may be included in an amount of 50 wt% or less, preferably, 20 wt% to 40 wt% based on the total weight of the auxiliary dispersant (the copolymer including an oxyalkylene unit and a styrene unit and/or an alkylene unit). When the above range is satisfied, the viscosity of the conductive agent dispersion may be reduced, and phase stability may be improved.

Specifically, the copolymer corresponding to the auxiliary dispersant according to the present invention may be a copolymer including an oxyalkylene unit and a styrene unit, a copolymer including an oxyalkylene unit and an alkylene unit, or a copolymer including an oxyalkylene unit, a styrene unit, and an alkylene unit.

According to the research of the present inventors, since the conductive agent dispersion includes the hydrogenated nitrile-based copolymer (main dispersant) having a residual double bond value of 0.3 wt% or less and the copolymer (auxiliary dispersant) including the oxyalkylene unit; and at least one of the styrene unit and the alkylene unit, an increase in the viscosity of the conductive agent dispersion may be effectively suppressed even during long-term storage or high-temperature exposure. This does not simply mean the viscosity of the prepared conductive agent dispersion, but has a different meaning than the existing one in that the increase in the viscosity of the conductive agent dispersion, which has a high possibility to be stored or exposed to high temperatures due to industrial characteristics, may be suppressed as much as possible. Accordingly, discharge and loading control of the electrode slurry during transfer and coating processes of the electrode slurry may be smooth, and life characteristics of a prepared battery may be improved.

The auxiliary dispersant copolymer of the present invention as described above may be prepared by using a copolymer preparation method well known in the art. For example, the auxiliary dispersant copolymer may be prepared by performing a polymerization reaction of compounds capable of deriving each unit, or may be prepared by reacting compounds including each unit through an acid-base reaction.

As the compound capable of deriving the oxyalkylene unit, for example, polyalkylene glycol, such as polyethylene glycol and polypropylene glycol, or an alkylene oxide-based compound, such as (poly)ethylene oxide and (poly) propylene oxide, may be used, but the present invention is not limited thereto.

As the compound capable of deriving the styrene unit, for example, styrene, α-methyl styrene, vinyltoluene, chloromethylstyrene, chlorostyrene, bromostyrene, vinylbenzenesulfonate, methoxymethylstyrene, or benzyl (meth)

acrylate may be used, but the present invention is not limited thereto.

As the compound capable of deriving the alkylene unit, for example, an alkyl (meth)acrylate monomer or an alkene monomer may be used. Examples of the alkyl (meth)acrylate monomer may be methyl (meth)acrylate, propyl (meth)acrylate, isopropyl (meth)acrylate, n-butyl (meth)acrylate, isobutyl (meth)acrylate, n-amyl (meth)acrylate, isoamyl (meth)acrylate, 2-ethylhexyl (meth)acrylate, 2-ethylbutyl (meth)acrylate, pentyl (meth)acrylate, hexyl (meth)acrylate, cyclohexyl (meth)acrylate, n-octyl (meth)acrylate, isooctyl (meth)acrylate, isononyl (meth)acrylate, decyl (meth)acrylate, dodecyl (meth)acrylate, tridecyl (meth)acrylate, tetradecyl (meth)acrylate, octadecyl (meth)acrylate, and isobornyl (meth) acrylate, but the present invention is not limited thereto.

Examples of the alkene monomer may be propene, butene, pentene, hexene, heptene, octene, nonene, decene, dodecene, tridecene, tetradecene, and octadecene, but the present invention is not limited thereto.

As the compounds including each unit, for example, polyalkylene glycol, a polyalkylene-styrene copolymer, a styrene-maleic anhydride copolymer, polyalkylene imine, or a surfactant including an oxyalkylene and/or alkylene unit may be used, but the present invention is not limited thereto.

The auxiliary dispersant may have a weight-average molecular weight of 800 g/mol to 50,000 g/mol, preferably, 800 g/mol to 30,000 g/mol. When the weight-average molecular weight of the auxiliary dispersant satisfies the above range, the viscosity of the conductive agent dispersion may be effectively reduced.

The auxiliary dispersant may be included in an amount of 0.1 wt% to 2.0 wt%, specifically, 0.2 wt% to 0.5 wt% in the conductive agent dispersion. When the above range is satisfied, the energy density of the prepared electrode may not be reduced while the effect of reducing the viscosity of the conductive agent dispersion is maintained even if some time passes.

A weight ratio of the main dispersant to the auxiliary dispersant may be in a range of 30:70 to 90:10, particularly 60:40 to 90:10, and more particularly 70:30 to 80:20. When the above range is satisfied, the increase in the viscosity of the conductive agent dispersion during long-term storage or high-temperature exposure may be effectively suppressed.

The main dispersant and the auxiliary dispersant may be included in a total amount of 0.5 wt% to 3.5 wt% (sum of the main dispersant and the auxiliary dispersant), specifically, 0.9 wt% to 1.8 wt% in the conductive agent dispersion. When the above range is satisfied, the dispersibility of the carbon nanotubes may be further improved.

**(3) Dispersion Medium**

The dispersion medium may be an organic solvent containing one or more heteroatoms selected from the group consisting of a nitrogen atom (N) and an oxygen atom (O) having a lone pair of electrons.

Specifically, the dispersion medium may include an amide-based polar organic solvent such as dimethylformamide (DMF), diethylformamide, dimethylacetamide (DMAc), and N-methylpyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol; polyhydric alcohols such as glycerin, trimethylolpropane, pentaerythritol, or sorbitol; glycol ethers such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, or tetraethylene glycol monobutyl ether; ketones such as acetone, methyl ethyl ketone, methyl propyl ketone, or cyclopentanone; and esters such as ethyl acetate, $\gamma$- butyrolactone, and $\varepsilon$-propiolactone, and any one thereof or a mixture of two or more thereof may be used. In consideration of compatibility with the electrode slurry, N-methyl pyrrolidone (NMP) is particularly preferred among them.

The conductive agent dispersion of the present invention including the above-described components may be prepared by mixing the carbon nanotubes, the main dispersant, the auxiliary dispersant, and the dispersion medium. In this case, the mixing may be performed using a conventional mixing method, specifically, a mixing device such as a homogenizer, a bead mill, a ball mill, a basket mill, an attrition mill, a universal stirrer, a clear mixer, a spike mill, or a TK mixer, and mixing order of each component is not particularly limited. That is, the conductive agent dispersion according to the present invention may be prepared by a method in which, after adding the carbon nanotubes to the dispersion medium, the main dispersant and the auxiliary dispersant are added and mixed, may be prepared by a method in which, after first adding the main dispersant and the auxiliary dispersant to the dispersion medium, the carbon nanotubes are mixed, and may be prepared by a method in which the main dispersant, the auxiliary dispersant, and the carbon nanotubes are added together to the dispersion medium and then mixed.

A cavitation dispersion treatment may be performed in order to increase the dispersibility of the carbon nanotubes in the above mixing process. The cavitation dispersion treatment is a dispersion treatment method using a shock wave which is generated by rupture of vacuum bubbles formed in water when high energy is applied to the liquid, wherein the above method may disperse the carbon nanotubes without impairing properties of the carbon nanotubes.

Specifically, the cavitation dispersion treatment may be performed by ultrasonic waves, a jet mill, or a shear dispersion treatment.

**<Electrode>**

Next, an electrode according to the present invention will be described.

The electrode according to the present invention includes an electrode active material layer which is formed of an electrode slurry composition including an electrode active material, a conductive agent dispersion, and a binder. Specifically, the electrode includes an electrode current collector and an electrode active material layer formed on the electrode current collector, and the electrode active material layer may be formed by an electrode slurry composition including an electrode active material, a conductive agent dispersion, and a binder.

In this case, the conductive agent dispersion is the above-described conductive agent dispersion according to the present invention. Since contents of the conductive agent dispersion are the same as those described above, a detailed description thereof will be omitted, and hereinafter, only the other components will be described.

The electrode current collector is not particularly limited as long as it has conductivity without causing adverse chemical changes in a battery, and, for example, copper, stainless steel, aluminum, nickel, titanium, alloys thereof, these materials that are surface-treated with one of carbon, nickel, titanium, silver, or the like, or fired carbon may be used.

The electrode current collector may typically have a thickness of 3 $\mu$m to 500 $\mu$m, and microscopic irregularities may be formed on the surface of the collector to improve the adhesion of an electrode active material. Also, the electrode current collector, for example, may be used in various shapes such as that of a film, a sheet, a foil, a net, a porous body, a foam body, a non-woven fabric body, and the like.

The electrode active material (a) included in the electrode active material layer may be a positive electrode active material or negative electrode active material commonly used in the art, but types thereof are not particularly limited.

For example, as the positive electrode active material, a lithium oxide including lithium and at least one metal such as cobalt, manganese, nickel, or aluminum may be used. Specifically, the lithium oxide may include lithium-manganese-based oxide (e.g., $LiMnO_2$, $LiMn_2O$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-Y1}Mn_{Y1}O_2$ (where 0<Y1<1), $LiMn_{2-Z1}Ni_{z1}O_4$ (where 0<Z1<2), etc.), lithium-nickel-cobalt-based oxide (e.g., $LiNi_{1-Y2}Co_{Y2}O_2$ (where 0<Y2<1), lithium-manganese-cobalt-based oxide (e.g., $LiCo_{1-Y3}Mn_{Y3}O_2$ (where 0<Y3<1), $LiMn_{2-Z2}Co_{z2}O_4$ (where 0<Z2<2), etc.), lithium-nickel-cobalt-manganese-based oxide (e.g., $Li(Ni_{P1}Co_{Q1}Mn_{R1})O_2$ (where 0<P1<1, 0<Q1<1, 0<R1<1, and P1+Q1+R1=1) or $Li(Ni_{P2}Co_{Q2}Mn_{R2})O_4$ (where 0<P2<2, 0<Q2<2, 0<R2<2, and P2+Q2+R2=2), etc.), or lithium-nickel-cobalt-manganese-transition metal (M) oxide (e.g., $Li(Ni_{P3}Co_{Q3}Mn_{R3}M^1{}_S)O_2$ (where $M^1$ is selected from the group consisting of aluminum (Al), copper (Cu), iron (Fe), vanadium (V), chromium (Cr), titanium (Ti), zirconium (Zr), zinc (Zn), tantalum (Ta), niobium (Nb), magnesium (Mg), boron (B), tungsten (W), and molybdenum (Mo), and P3, Q3, R3, and S are atomic fractions of each independent elements, wherein 0<P3<1, 0<Q3<1, 0<R3<1, 0<S<1, and P3+Q3+R3+S=1), etc.), and any one thereof or a mixture of two or more thereof may be included.

The negative electrode active material, for example, may include a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_v$ (0<v<2), $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material.

The electrode active material may be included in an amount of 70 wt% to 99 wt%, preferably, 80 wt% to 98 wt% based on a total solid content in the electrode slurry composition. When the amount of the positive electrode active material satisfies the above range, excellent energy density, electrode adhesion, and electrical conductivity may be achieved.

The binder is for securing adhesion between the electrode active materials and adhesion of the electrode active material to the current collector, wherein common binders used in the art may be used, and types thereof are not particularly limited. The binder, for example, may include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylenepropylene-diene polymer (EPDM), a sulfonated-EPDM, a styrenebutadiene rubber (SBR), a fluorine rubber, or various copolymers thereof, and any one thereof or a mixture of two or more thereof may be used.

The binder may be included in an amount of 5 wt% or less, preferably, 1 wt% to 3 wt% based on the total solid content in the electrode slurry composition. In a case in which the amount of the binder satisfies the above range, excellent electrode adhesion may be achieved while minimizing an increase in electrode resistance.

The electrode slurry composition may further include a solvent, if necessary, for viscosity control. In this case, the

solvent may be water, an organic solvent, or a mixture thereof. The organic solvent, for example, may include an amide-based polar organic solvent such as dimethylformamide (DMF), diethylformamide, dimethylacetamide (DMAc), and N-methylpyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol; polyhydric alcohols such as glycerin, trimethylolpropane, pentaerythritol, or sorbitol; glycol ethers such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, or tetraethylene glycol monobutyl ether; ketones such as acetone, methyl ethyl ketone, methyl propyl ketone, or cyclopentanone; and esters such as ethyl acetate, γ- butyrolactone, and ε-propiolactone, and any one thereof or a mixture of two or more thereof may be used, but the present invention is not limited thereto.

The solvent may be included in an amount such that the solid content in the electrode slurry is in a range of 60 wt% to 85 wt%, preferably, 65 wt% to 80 wt%. In a case in which the solid content of the electrode slurry is less than 60 wt%, an electrode loading amount may be reduced to increase processing costs, and binder migration may occur to reduce the electrode adhesion and cause coating defects. In a case in which the solid content of the electrode slurry is greater than 85 wt%, since viscosity of the electrode slurry may be excessively increased, processability may be reduced and coating defects may occur.

The electrode according to the present invention may be prepared by coating and drying the electrode slurry composition including the above-described components to form an electrode active material layer. Specifically, the electrode active material layer may be prepared by a method of coating the electrode slurry on an electrode current collector and drying the coated electrode current collector, or may be prepared by a method of casting the electrode slurry on a separate support and then laminating a film separated from the support on the electrode current collector. If necessary, the electrode active material layer is formed by the above-described method, and a rolling process may then be further performed. In this case, the drying and the rolling may be performed under appropriate conditions in consideration of physical properties of the electrode to be finally prepared, and are not particularly limited.

## <Lithium Secondary Battery>

Next, a lithium secondary battery according to the present invention will be described.

The lithium secondary battery according to the present invention includes the above-described electrode of the present invention. In this case, the electrode may be at least one of a positive electrode and a negative electrode. Specifically, the lithium secondary battery according to the present invention may include a positive electrode, a negative electrode, a separator disposed between the positive electrode and the negative electrode, and an electrolyte, and, in this case, at least one of the positive electrode and the negative electrode may be the above-described electrode of the present invention. Preferably, the electrode of the present invention may be a positive electrode.

Since the electrode according to the present invention has been described above, a detailed description thereof will be omitted, and hereinafter, only the other components will be described.

The separator separates the negative electrode and the positive electrode and provides a movement path of lithium ions, wherein any separator may be used as the separator without particular limitation as long as it is typically used in a lithium secondary battery. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include a non-aqueous organic solvent and a metal salt.

As the non-aqueous organic solvent, for example, an aprotic solvent, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydroxy franc, 2-methyl tetrahydrofuran, dimethyl sulfoxide, 1,3-dioxolane, formamide, diemthylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate, may be used.

Particularly, among the carbonate-based organic solvents, since ethylene carbonate and propylene carbonate, as cyclic carbonate, well dissociate a lithium salt due to high permittivity as a highly viscous organic solvent, the cyclic carbonate may be preferably used, and, since an electrolyte having high electrical conductivity may be prepared when the above cyclic carbonate is mixed with low viscosity, low permittivity linear carbonate, such as dimethyl carbonate and diethyl carbonate, in an appropriate ratio and used, the cyclic carbonate may be more preferably used.

A lithium salt may be used as the metal salt, and the lithium salt is a material that is readily soluble in the non-aqueous organic solvent, wherein, for example, at least one selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$ may be used as an anion of the lithium salt.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexa-phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

Specifications of each component used in the following examples and comparative examples are as follows.

(A) Main Dispersant

A hydrogenated acrylonitrile-butadiene rubber (H-NBR) having the following physical properties was prepared.

[Table 1]

| Main dispersant | Mw(g/mol) | Residual double bond (RDB, wt%) | Acrylonitrile-derived unit content (wt%) |
|---|---|---|---|
| (A1) | 40,000 | 0.2 | 34 |
| (A2) | 220, 000 | 0.3 | 34 |
| (A3) | 30,000 | 9.5 | 31 |

(B) Auxiliary Dispersant

An auxiliary dispersant having the following physical properties was prepared.

[Table 2]

| Auxiliary dispersant | Type | Mw(g/mol) | Unit content |
|---|---|---|---|
| (B1) | Copolymer of polyethylene glycol and styrene (copolymer containing oxyalky-lene unit and styrene unit) | 1,250 | Oxyalkylene unit content: 71.8 wt% Styrene unit content: 28.2 wt% |
| (B2) | Polyvinyl butyral copolymer containing vinyl alcohol-derived unit | 40,000 | Vinyl alcohol-derived unit content: 40 wt% |

The content of each unit in the copolymer was measured by nuclear magnetic resonance (NMR).

(C) Carbon Nanotubes

(C1) Bundle-type multi-walled carbon nanotubes (CNT, manufacturer: LG CHEM) having a BET specific surface area of 185 $m^2/g$ were used.

(C2) Bundle-type multi-walled carbon nanotubes (CNT, manufacturer: LG CHEM) having a BET specific surface area of 260 $m^2/g$ were used.

## Examples 1 to 5 and Comparative Examples 1 to 3

After the main dispersant (A), the auxiliary dispersant (B), and the carbon nanotubes (C) were added to N-methyl pyrrolidone according to the contents listed in the following Table 3 to prepare each mixed solution, 30 kg of the mixed solution was mixed for 180 minutes using a mixer (BTM-50, disperser 1000 rpm/anchor 100 rpm). The mixed mixture was stirred for 5 minutes using a NETZSCH bead mill (NETZSCH LMZ2, bead size: 0.65 mm/2500 rpm) to obtain a conductive agent dispersion.

[Table 3]

| Conductive agent dispersion | Main dispersant | | Auxiliary dispersant (wt%) | | Carbon nanotubes | |
|---|---|---|---|---|---|---|
| | Type | Content (wt%) | Type | Content (wt%) | Type | Content (wt%) |
| Example 1 | (A1) | 1.5 | (B1) | 0.5 | (C1) | 6 |
| Example 2 | (A1) | 0.75 | (B1) | 0.25 | (C2) | 4 |
| Example 3 | (A1) | 1.8 | (B1) | 0.2 | (C1) | 6 |
| Example 4 | (A1) | 1.0 | (B1) | 1.0 | (C1) | 6 |
| Example 5 | (A2) | 1.5 | (B1) | 0.5 | (C1) | 6 |
| Comparative Example 1 | (A1) | 2.0 | (B1) | 0 | (C1) | 6 |
| Comparative Example 2 | (A3) | 0.75 | (B1) | 0.25 | (C2) | 4 |
| Comparative Example 3 | (A1) | 1.5 | (B2) | 0.5 | (C1) | 6 |

## Experimental Example 1: Particle Size Analysis

Particle sizes of each of the conductive agent dispersions of the Examples and the Comparative Examples were analyzed through laser diffraction and are presented in Table 4. Specifically, after dispersing the conductive agent dispersion in a solvent, a particle size distribution was calculated by measuring a difference in diffraction patterns due to the particle size when the solution was introduced into a laser diffraction particle size measurement instrument (Malvern, Mastersizer 3000) and particles passed through a laser beam. $D_{50}$ and $D_{90}$ were measured by identifying particle diameters at points where 50% and 90% were obtained in a cumulative volume distribution according to the particle diameter.

## Experimental Example 2: Viscosity Analysis (Immediately After Preparing the Conductive Agent Dispersion)

Viscosities of the conductive agent dispersions prepared in the Examples and the Comparative Examples were measured at 23°C and 12 rpm using a viscometer (Brookfield, viscometer DV2T, LV), and are presented in Table 4.

## Experimental Example 3: Confirmation of Viscosity Increase During Long-term storage

A rate of increase in viscosity, when the viscosity was measured after storage at 25°C for 4 weeks, from the viscosity immediately after the preparation of each of the conductive agent dispersions of the Examples and the Comparative Examples, was confirmed and presented in Table 4.

Viscosity increase rate (%) = {(viscosity of conductive agent dispersion after storage at 25°C for 4 weeks - viscosity immediately after the preparation of the conductive agent dispersion)/viscosity immediately after the preparation of the conductive agent dispersion}×100

## Experimental Example 4: Confirmation of Viscosity Increase During High-temperature Exposure

A rate of increase in viscosity, when the viscosity of the conductive agent dispersion exposed at 60°C for 30 minutes was measured, from the viscosity immediately after the preparation of each of the conductive agent dispersions of the Examples and the Comparative Examples, was confirmed and presented in Table 4.

Viscosity increase rate (%) = {(viscosity of conductive agent dispersion exposed at 60°C for 30 minutes - viscosity immediately after the preparation of the conductive agent dispersion)/viscosity immediately after the preparation of the conductive agent dispersion}×100

[Table 4]

| Conductive agent dispersion | Particle size | | Viscosity (cp) | Viscosity increase rate(%) | |
|---|---|---|---|---|---|
| | $D_{50}$ (μm) | $D_{90}$ (μm) | | Storage at 25°C for 4 weeks | Exposure at 60°C for 30 minutes |
| Example 1 | 3.59 | 8.0 | 6,500 | 4 | 12 |
| Example 2 | 3.08 | 7.3 | 5,200 | 5 | 11 |
| Example 3 | 3.78 | 9.1 | 9,700 | 10 | 15 |
| Example 4 | 3.93 | 10.1 | 10,600 | 12 | 18 |
| Example 5 | 4.83 | 11.4 | 18,900 | 12 | 22 |
| Comparative Example 1 | 4.25 | 9.8 | 13,800 | 36 | 79 |
| Comparative Example 2 | 3.91 | 8.5 | 10,500 | 61 | 290 |
| Comparative Example 3 | 4.25 | 10.8 | 15, 830 | 34 | 81 |

**Experimental Example 5: Capacity Retention Evaluation**

For Examples 1, 2, and 5 and Comparative Example 2, positive electrodes were prepared in the following manner.

$Li[Ni_{0.6}Co_{0.2}Mn_{0.2}]O_2$ as a positive electrode active material, PVDF (900,000 g/mol) as a binder, and the conductive agent dispersion were mixed with NMP and mixed with a homodisperser (2500 rpm) for 60 minutes to prepare a positive electrode slurry. In this case, the positive electrode active material, the binder, and the conductive agent including a dispersant were present in the positive electrode slurry in a ratio of 97:2:1, respectively. The positive electrode slurry was coated on a current collector at a loading amount of 550 mg/25 $cm^2$, dried, and rolled to prepare a positive electrode including a positive electrode active material layer having a porosity of 26%.

A negative electrode including a negative electrode active material layer, which included 96.5 wt% of artificial graphite, 0.5 wt% of a point-type conductive agent, 1 wt% of carboxymethyl cellulose (CMC), and 2 wt% of a styrene butadiene rubber (SBR) and had a loading amount of 330 mg/25 $cm^2$, was prepared.

The positive electrode, the negative electrode, and a porous polyethylene separator were assembled using a stacking method, and an electrolyte solution (ethylene carbonate (EC)/ethylmethyl carbonate (EMC)=1/2(volume ratio), lithium hexafluorophosphate ($LiPF_6$ 1 mole)) was injected into the assembled battery to prepare a lithium secondary battery.

Each lithium secondary battery was charged and discharged under the following conditions.

Charging conditions: charged at a constant current of 0.5 C to 4.25 V, thereafter charged to 4.2 V until a current rate of 0.1 C

Discharging conditions: discharged at a current rate of 0.5 C to 2.8 V

When the above charging and discharging were set as one cycle, 100 cycles were performed at 45°C. Thereafter, discharge capacity (capacity retention) after 100 cycles was evaluated based on 100% of discharge capacity after one cycle and is presented in Table 5.

[Table 5]

| Conductive agent dispersion | Capacity retention (%) |
|---|---|
| Example 1 | 97.2 |
| Example 2 | 96.8 |
| Example 5 | 95.2 |
| Comparative Example 2 | 90.2 |

## Claims

1. A conductive agent dispersion comprising carbon nanotubes, a dispersant, and a dispersion medium,

   wherein the dispersant comprises a main dispersant and an auxiliary dispersant,
   wherein the main dispersant is a hydrogenated nitrile-based copolymer,
   a residual double bond value of the hydrogenated nitrile-based copolymer according to Equation 1 satisfies 0.3 wt% or less, and
   the auxiliary dispersant is a copolymer including an oxyalkylene unit; and at least one of a styrene unit and an alkylene unit,

   $$\text{Residual double bond (wt\%)} = \text{CD weight}/(\text{CD weight}+\text{HCD weight})\times 100 \qquad \text{[Equation 1]}$$

   wherein, in Equation 1, the CD weight is a weight of a conjugated diene-derived structural unit in the hydrogenated nitrile-based copolymer, and the HCD weight is a weight of a hydrogenated conjugated diene-derived structural unit in the hydrogenated nitrile-based copolymer.

2. The conductive agent dispersion of claim 1, wherein the hydrogenated nitrile-based copolymer comprises an $\alpha,\beta$-unsaturated nitrile-derived structural unit, a conjugated diene-derived structural unit, and a hydrogenated conjugated diene-derived structural unit.

3. The conductive agent dispersion of claim 2, wherein the $\alpha,\beta$-unsaturated nitrile-derived structural unit is included in an amount of 20 wt% to 50 wt% in the hydrogenated nitrile-based copolymer.

4. The conductive agent dispersion of claim 1, wherein the hydrogenated nitrile-based copolymer has a weight-average molecular weight of 1,000 g/mol to 100,000 g/mol.

5. The conductive agent dispersion of claim 1, wherein the hydrogenated nitrile-based copolymer is included in an amount of 0.2 wt% to 3.2 wt% in the conductive agent dispersion.

6. The conductive agent dispersion of claim 1, wherein the hydrogenated nitrile-based copolymer is a partially hydrogenated acrylonitrile-butadiene rubber.

7. The conductive agent dispersion of claim 1, wherein the oxyalkylene unit is included in an amount of 20 wt% to 85 wt% in the auxiliary dispersant.

8. The conductive agent dispersion of claim 1, wherein the auxiliary dispersant has a weight-average molecular weight of 800 g/mol to 50,000 g/mol.

9. The conductive agent dispersion of claim 1, wherein the auxiliary dispersant is included in an amount of 0.1 wt% to 2.0 wt% in the conductive agent dispersion.

10. The conductive agent dispersion of claim 1, wherein a weight ratio of the main dispersant to the auxiliary dispersant is in a range of 30:70 to 90:10.

11. The conductive agent dispersion of claim 1, wherein the carbon nanotubes have a $D_{50}$ of 2 $\mu$m to 5 $\mu$m.

12. The conductive agent dispersion of claim 1, wherein the carbon nanotubes have a $D_{90}$ of 6 $\mu$m to 10.5 $\mu$m.

13. The conductive agent dispersion of claim 1, wherein the carbon nanotubes are multi-walled carbon nanotubes.

14. An electrode comprising an electrode active material layer formed of an electrode slurry composition, wherein the electrode slurry composition comprises an electrode active material, the conductive agent dispersion of claim 1, a binder, and a solvent.

15. A lithium secondary battery comprising a positive electrode, a negative electrode, a separator disposed between the positive electrode and the negative electrode, and an electrolyte,

wherein the positive electrode is the electrode of claim 14.

## Patentansprüche

**1.** Dispersion eines leitfähigen Mittels, umfassend Kohlenstoffnanoröhrchen, ein Dispergiermittel und ein Dispersionsmedium,

wobei das Dispergiermittel ein Hauptdispergiermittel und ein Hilfsdispergiermittel umfasst,
wobei das Hauptdispergiermittel ein Copolymer auf Basis eines hydrierten Nitrils ist,
ein Restdoppelbindungswert des Copolymers auf Basis eines hydrierten Nitrils gemäß Gleichung 1 0,3 Gew.-% oder weniger erfüllt und
das Hilfsdispergiermittel ein Copolymer ist, das eine Oxyalkyleneinheit und mindestens eine von einer Styroleinheit und einer Alkyleneinheit enthält,

$$\text{Restkohlenstoffbindung (Gew.-\%)} = \text{CD-Gewicht}/(\text{CD-Gewicht}+\text{HCD-Gewicht}) \times 100 \qquad \text{[Gleichung 1]}$$

wobei in Gleichung 1 das CD-Gewicht ein Gewicht einer von einem konjugierten Dien abgeleiteten Struktureinheit in dem Copolymer auf Basis eines hydrierten Nitrils ist und das HCD-Gewicht ein Gewicht einer von einem hydrierten konjugierten Dien abgeleiteten Struktureinheit in dem Copolymer auf Basis eines hydrierten Nitrils ist.

**2.** Dispersion eines leitfähigen Mittels nach Anspruch 1, wobei das Copolymer auf Basis eines hydrierten Nitrils eine von einem $\alpha,\beta$-ungesättigten Nitril abgeleitete Struktureinheit, eine von einem konjugierten Dien abgeleitete Struktureinheit und eine von einem hydrierten konjugierten Dien abgeleitete Struktureinheit umfasst.

**3.** Dispersion eines leitfähigen Mittels nach Anspruch 2, wobei die von dem $\alpha,\beta$-ungesättigten Nitril abgeleitete Struktureinheit in einer Menge von 20 Gew.-% bis 50 Gew.-% in dem Copolymer auf Basis eines hydrierten Nitrils enthalten ist.

**4.** Dispersion eines leitfähigen Mittels nach Anspruch 1, wobei das Copolymer auf Basis eines hydrierten Nitrils ein gewichtsmittleres Molekulargewicht von 1.000 g/mol bis 100.000 g/mol aufweist.

**5.** Dispersion eines leitfähigen Mittels nach Anspruch 1, wobei das Copolymer auf Basis eines hydrierten Nitrils in einer Menge von 0,2 Gew.-% bis 3,2 Gew.-% in der Dispersion eines leitfähigen Mittels enthalten ist.

**6.** Dispersion eines leitfähigen Mittels nach Anspruch 1, wobei das Copolymer auf Basis eines hydrierten Nitrils ein partiell hydrierter Acrylnitril-Butadien-Kautschuk ist.

**7.** Dispersion eines leitfähigen Mittels nach Anspruch 1, wobei die Oxyalkyleneinheit in einer Menge von 20 Gew.-% bis 85 Gew.-% in dem Hilfsdispergiermittel enthalten ist.

**8.** Dispersion eines leitfähigen Mittels nach Anspruch 1, wobei das Hilfsdispergiermittel ein gewichtsmittleres Molekulargewicht von 800 g/mol bis 50.000 g/mol aufweist.

**9.** Dispersion eines leitfähigen Mittels nach Anspruch 1, wobei das Hilfsdispergiermittel in einer Menge von 0,1 Gew.-% bis 2,0 Gew.-% in der Dispersion eines leitfähigen Mittels enthalten ist.

**10.** Dispersion eines leitfähigen Mittels nach Anspruch 1, wobei ein Gewichtsverhältnis des Hauptdispergiermittels zum Hilfsdispergiermittel in einem Bereich von 30:70 bis 90:10 liegt.

**11.** Dispersion eines leitfähigen Mittels nach Anspruch 1 wobei die Kohlenstoffnanoröhrchen einen $D_{50}$ von 2 $\mu$m bis 5 $\mu$m aufweisen.

**12.** Dispersion eines leitfähigen Mittels nach Anspruch 1, wobei die Kohlenstoffnanoröhrchen einen $D_{90}$ von 6 $\mu$m bis 10,5 $\mu$m aufweisen.

**13.** Dispersion eines leitfähigen Mittels nach Anspruch 1, wobei die Kohlenstoffnanoröhrchen mehrwandige Kohlen-

stoffnanoröhrchen sind.

**14.** Elektrode, umfassend eine Elektrodenaktivmaterialschicht, die aus einer Elektrodenaufschlämmungszusammensetzung gebildet ist,
wobei die Elektrodenaufschlämmungszusammensetzung ein Elektrodenaktivmaterial, die Dispersion eines leitfähigen Mittels nach Anspruch 1, ein Bindemittel und ein Lösungsmittel enthält.

**15.** Lithiumsekundärbatterie, umfassend eine positive Elektrode, eine negative Elektrode, einen Separator, der zwischen der positiven Elektrode und der negativen Elektrode angeordnet ist, und einen Elektrolyten,
wobei die positive Elektrode die Elektrode nach Anspruch 14 ist.

## Revendications

**1.** Dispersion d'agent conducteur comprenant des nanotubes de carbone, un dispersant et un milieu de dispersion,

dans laquelle le dispersant comprend un dispersant principal et un dispersant auxiliaire,
dans laquelle le dispersant principal est un copolymère à base de nitrile hydrogéné,
une valeur de double liaison résiduelle du copolymère à base de nitrile hydrogéné selon l'Équation 1 satisfait à 0,3 % en poids ou moins, et
le dispersant auxiliaire est un copolymère incluant un motif oxyalkylène ; et au moins un d'un motif styrène et d'un motif alkylène,

Double liaison résiduelle (% en poids) = poids de CD/(poids de CD+poids de HCD) $\times$ 100 [Equation 1]

dans laquelle, dans l'Équation 1, le poids de CD est un poids d'un motif structural dérivé d'un diène conjugué dans le copolymère à base de nitrile hydrogéné, et le poids de HCD est un poids d'un motif structural dérivé d'un diène conjugué hydrogéné dans le copolymère à base de nitrile hydrogéné.

**2.** Dispersion d'agent conducteur selon la revendication 1, dans laquelle le copolymère à base de nitrile hydrogéné comprend un motif structural dérivé d'un nitrile $\alpha,\beta$-insaturé, un motif structural dérivé d'un diène conjugué et un motif structural dérivé d'un diène conjugué hydrogéné.

**3.** Dispersion d'agent conducteur selon la revendication 2, dans laquelle le motif structural dérivé d'un nitrile $\alpha,\beta$-insaturé est inclus dans une quantité de 20 % en poids à 50 % en poids dans le copolymère à base de nitrile hydrogéné.

**4.** Dispersion d'agent conducteur selon la revendication 1, dans laquelle le copolymère à base de nitrile hydrogéné présente un poids moléculaire moyen en poids de 1 000 g/mol à 100 000 g/mol.

**5.** Dispersion d'agent conducteur selon la revendication 1, dans laquelle le copolymère à base de nitrile hydrogéné est inclus dans une quantité de 0,2 % en poids à 3,2 % en poids dans la dispersion d'agent conducteur.

**6.** Dispersion d'agent conducteur selon la revendication 1, dans laquelle le copolymère à base de nitrile hydrogéné est un caoutchouc acrylonitrile-butadiène partiellement hydrogéné.

**7.** Dispersion d'agent conducteur selon la revendication 1, dans laquelle le motif oxyalkylène est inclus dans une quantité de 20 % en poids à 85 % en poids dans le dispersant auxiliaire.

**8.** Dispersion d'agent conducteur selon la revendication 1, dans laquelle le dispersant auxiliaire présente un poids moléculaire moyen en poids de 800 g/mol à 50 000 g/mol.

**9.** Dispersion d'agent conducteur selon la revendication 1, dans laquelle le dispersant auxiliaire est inclus dans une quantité de 0,1 % en poids à 2,0 % en poids dans la dispersion d'agent conducteur.

**10.** Dispersion d'agent conducteur selon la revendication 1, dans laquelle un rapport en poids du dispersant principal au dispersant auxiliaire est compris dans une plage de 30:70 à 90:10.

**11.** Dispersion d'agent conducteur selon la revendication 1, dans laquelle les nanotubes de carbone présentent un $D_{50}$ de 2 μm à 5 μm.

**12.** Dispersion d'agent conducteur selon la revendication 1, dans laquelle les nanotubes de carbone présentent un $D_{90}$ de 6 μm à 10,5 μm.

**13.** Dispersion d'agent conducteur selon la revendication 1, dans laquelle les nanotubes de carbone sont des nanotubes de carbone à parois multiples.

**14.** Électrode comprenant une couche de matériau actif d'électrode formée d'une composition de suspension d'électrode,
dans laquelle la composition de suspension d'électrode comprend un matériau actif d'électrode, la dispersion d'agent conducteur selon la revendication 1, un liant et un solvant.

**15.** Batterie secondaire au lithium comprenant une électrode positive, une électrode négative, un séparateur disposé entre l'électrode positive et l'électrode négative, et un électrolyte,
dans laquelle l'électrode positive est l'électrode selon la revendication 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020235849 A
- KR 1020170111749